# EUROPEAN PATENT APPLICATION

(11) **EP 4 822 397 A1**
(43) Date of publication of application: **14.10.2026**
(21) Application number: 25184994.9
(22) Date of filing: 24.06.2025
(51) Int. Cl.: G01S 17/42, G01S 7/48, G01S 17/88, G06Q 10/087

(54) **DETECTION METHOD, DETECTION SYSTEM, STORAGE MEDIUM AND COMPUTER PROGRAM PRODUCT**

(30) Priority: 09.04.2025 CN 202510442904
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: SHANG, Chunpeng, Beijing, 100176 (CN)
(74) Representative: Page White Farrer

(57) **Abstract**

A detection method, a detection system, a storage medium and a computer program product are provided. The detection method for detecting a storage depth of goods of a target goods channel (11) in a shelf (1) comprises: scanning the target goods channel (11) by a laser radar (2) located on one side of the target goods channel (11) away from an output end (111) of the target goods channel (11) to obtain point cloud data, wherein a scanning plane (21) of the laser radar (2) is configured to intersect with a bottom surface (112) of the target goods channel (11) during a process of scanning the target goods channel (11); determining a distance between the goods (114) in the target goods channel (11) and the laser radar (2) according to the point cloud data; and determining a storage depth of goods of the target goods channel (11) according to the distance. It is possible to more effectively detect a storage depth of goods of the target goods channel.

## Description

### TECHNICAL FIELD

The present disclosure relates to a detection method, a detection system, a storage medium and a computer program product.

### BACKGROUND

In the field of warehousing and logistics, it is often necessary to inventory each goods channel in the shelf regularly or irregularly to acknowledge an inventory state. In some related technologies, a storage depth of goods is detected by a laser distance measurement sensor when the goods channels in the shelf are inventoried. The single-beam laser emitted by the sensor is measured along the direction of the goods channel to obtain a distance from the laser distance measurement sensor to the goods in the goods channel, so as to further determine an actual storage depth of goods.

### SUMMARY

It has been found through studies that, in a measurement method used in the related art, it is required that the emission angle of laser emitted by the sensor is parallel to the goods channel as much as possible, and at the same time, the goods channel requires a very high flatness, so that laser may accurately reach the surface of the goods to be measured. However, in actual scenes, the goods channel might be deformed due to its very long length, so that it is not easy to ensure the flatness, and laser might be shielded by a deformed goods channel. For thin goods, if an emission angle of laser is not parallel enough to the goods channel or the goods channel is apparently deformed, it is possible to cause that the laser path is staggered with the surface of the goods, so that the laser can not reach the goods accurately, which makes it more difficult to detect a storage depth in these circumstances.

In view of this, the embodiment of the present disclosure provides a detection method, a detection system, a storage medium and a computer program product, which may more effectively detect a storage depth of goods of a target goods channel.

In one aspect of the present disclosure, a detection method for detecting a storage depth of goods of a target goods channel in a shelf is provided. The method includes: scanning the target goods channel by a laser radar located on one side of the target goods channel away from an output end of the target goods channel to obtain point cloud data, wherein a scanning plane of the laser radar is configured to intersect with a bottom surface of the target goods channel during a process of scanning the target goods channel; determining a distance between the goods in the target goods channel and the laser radar according to the point cloud data; and determining a storage depth of goods of the target goods channel according to the distance.

In some embodiments, the step of determining a distance between the goods in the target goods channel and the laser radar according to the point cloud data includes: screening for the point cloud data corresponding to the target goods channel in the point cloud data; and determining a distance between the goods in the target goods channel and the laser radar according to each sampling angle and length value in the point cloud data corresponding to the target goods channel.

In some embodiments, the step of screening for the point cloud data corresponding to the target goods channel in the point cloud data includes: determining point cloud data in which an absolute value of the difference between each of length values corresponding to sampling angles consecutively exceeding a preset number and a length value corresponding to an initial count is not greater than a preset length threshold in the point cloud data, so as to obtain consecutive segment records of the point cloud data, wherein the consecutive segment records include a sampling angle corresponding to the initial count, the length value corresponding to the initial count and the number of consecutive sampling counting; and screening out a consecutive segment record in which the sampling angle and the length value do not conform to a preset corresponding relationship from the consecutive segment records obtained to determine the point cloud data corresponding to the target goods channel.

In some embodiments, the step of screening out a consecutive segment record in which the sampling angle and the length value do not conform to a preset corresponding relationship from the consecutive segment records obtained includes: querying each consecutive segment record according to a stored table of a corresponding relationship between a sampling angle and a length value to determine the consecutive segment record that does not conform to the preset corresponding relationship in the stored table of the corresponding relationship; and screening out the consecutive segment record that does not conform to the preset corresponding relationship in the stored table of the corresponding relationship.

In some embodiments, the step of screening out a consecutive segment record in which the sampling angle and the length value do not conform to a preset corresponding relationship from the consecutive segment records obtained includes: screening out consecutive segment records of a sampling angle and a length value corresponding to a support beam of the target goods channel and a support beam of the adjacent goods channel respectively from the consecutive segment records obtained.

In some embodiments, the step of screening for the point cloud data corresponding to the target goods channel in the point cloud data includes: further screening for the point cloud data corresponding to the target goods channel in the point cloud data according to a sampling angle and a length value corresponding to the support beam of the target goods channel and a sampling angle and a length value corresponding to a support beam of the adjacent goods channel.

In some embodiments, the step of determining a distance between the goods in the target goods channel and the laser radar according to the point cloud data includes: screening for the point cloud data with a sampling angle that conforms to a preset angle range in the point cloud data, wherein the target goods channel is located in the preset angle range; and determining a distance between the goods in the target goods channel and the laser radar according to a sampling angle and a corresponding length value in the point cloud data that conforms to the preset angle range.

In some embodiments, an angle value corresponding to the preset angle range is less than 45°.

In some embodiments, the shelf includes multiple layers of goods channels, and the point cloud data that conforms to a preset angle range includes: point cloud data corresponding to the target goods channel and point cloud data corresponding to a goods channel where the bottom surface in an adjacent goods channel of the target goods channel intersects with the scanning plane; wherein the step of determining a distance between the goods in the target goods channel and the laser radar according to the point cloud data includes: further screening for the point cloud data corresponding to the target goods channel in the point cloud data that conforms to the preset angle range; and determining a distance between the goods in the target goods channel and the laser radar according to each sampling angle and length value in the point cloud data corresponding to the target goods channel.

In some embodiments, the detection method further includes: in response to an instruction to detect the target goods channel, driving the laser radar to move to a position on an upper side of an extension line of the target goods channel on one side of the target goods channel away from the output end along a length direction of the goods channel so as to perform a scanning operation at the position.

In some embodiments, a distance of a position where the laser radar performs a scanning operation relative to the extension line in a vertical direction is not greater than a height of the target goods channel.

In one aspect of the present disclosure, a detection system is provided. The system includes: a laser radar; a memory; and a processor coupled to the memory and configured to perform the aforementioned detection method based on instructions stored in the memory.

In one aspect of the present disclosure, a computer-readable storage medium is provided. The computer-readable storage medium has computer instructions non-transiently stored thereon that, when executed by a processor, implement the aforementioned detection method.

In one aspect of the present disclosure, a computer program product is provided. The computer program product includes a computer program that, when executed by a processor, implements the aforementioned detection method.

According to the embodiment of the present disclosure, the laser radar scans the target goods channel through a scanning plane intersecting with a bottom surface of the target goods channel, and since the laser radar may cover a large space range, the goods in the goods channel are more easily captured by the laser radar, so as to reduce the influence on the detection of the goods due to the factors such as the deformation of the goods channel and the thickness of the goods. Compared with the single distance measurement data of the laser distance measurement sensor in the related art, the point cloud data scanned by the laser radar has more detailed information, which is beneficial to screen out the interference of the structures such as other goods channels and support beams in detecting a storage depth of goods of a target goods channel, so as to detect a storage depth of goods of a target goods channel more effectively.

### BRIEF DESCRIPTION OF THE DRAWINGS

The accompanying drawings which constitute a part of this specification, illustrate the embodiments of the present disclosure, and together with this specification, serve to explain the principles of the present disclosure.

The present disclosure may be more explicitly understood from the following detailed description with reference to the accompanying drawings, in which:
Fig. 1 is a schematic view of a scene structure applied in the embodiment of the detection method according to the present disclosure;
Fig. 2 is a schematic view of scanning a shelf by a laser radar in the embodiment of the detection method according to the present disclosure;
Fig. 3 is a flow chart of some embodiments of the detection method according to the present disclosure;
Fig. 4 is a schematic view of the relationship between the scanning plane and the bottom surfaces of the target goods channel and an adjacent goods channel in the embodiment of the detection method according to the present disclosure;
Fig. 5 is a schematic view of the principles of screening for the goods through consecutive segment records obtained in the embodiment of the detection method according to the present disclosure;
Fig. 6 is a schematic view of the principles of screening out other interferences except the goods in the target goods channel in the embodiment of the detection method according to the present disclosure;
Fig. 7 is a schematic view of processing the point cloud data corresponding to a support beam in the embodiment of the detection method according to the present disclosure;
Fig. 8 is a structural schematic view of some embodiments of the detection system according to the present disclosure.

It should be understood that the dimensions of various parts shown in the accompanying drawings are not drawn according to actual proportional relations. In addition, the same or similar components are denoted by the same or similar reference signs.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noted that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, amount or importance, but are merely used to distinguish between different parts. A word such as "include", "have" or variants thereof means that the element before the word covers the element(s) listed after the word without excluding the possibility of also covering other elements. The terms "up", "down", "left", "right", or the like are used only to represent a relative positional relationship, and the relative positional relationship may be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

In some related technologies, a storage depth of goods is detected by a laser distance measurement sensor when the goods channels in the shelf are inventoried. The single-beam laser emitted by the sensor is measured along the direction of the goods channel to obtain a distance from the laser distance measurement sensor to the goods in the goods channel, so as to further determine an actual storage depth of goods.

It has been found through studies that, in a measurement method used in the related art, it is required that the emission angle of laser emitted by the sensor is parallel to the goods channel as much as possible, and at the same time, the goods channel requires a very high flatness, so that laser may accurately reach the surface of the goods to be measured. However, in actual scenes, the goods channel might be deformed due to its very long length, so that it is not easy to ensure the flatness, and laser might be shielded by a deformed goods channel. For thin goods, if an emission angle of laser is not parallel enough to the goods channel or the goods channel is apparently deformed, it is possible to cause that the laser path is staggered with the surface of the goods, so that to the laser can not reach the goods accurately, which makes it more difficult to detect a storage depth in these circumstances.

In view of this, the embodiment of the present disclosure provides a detection method, a detection system, a storage medium and a computer program product, which may more effectively detect a storage depth of goods of a target goods channel.

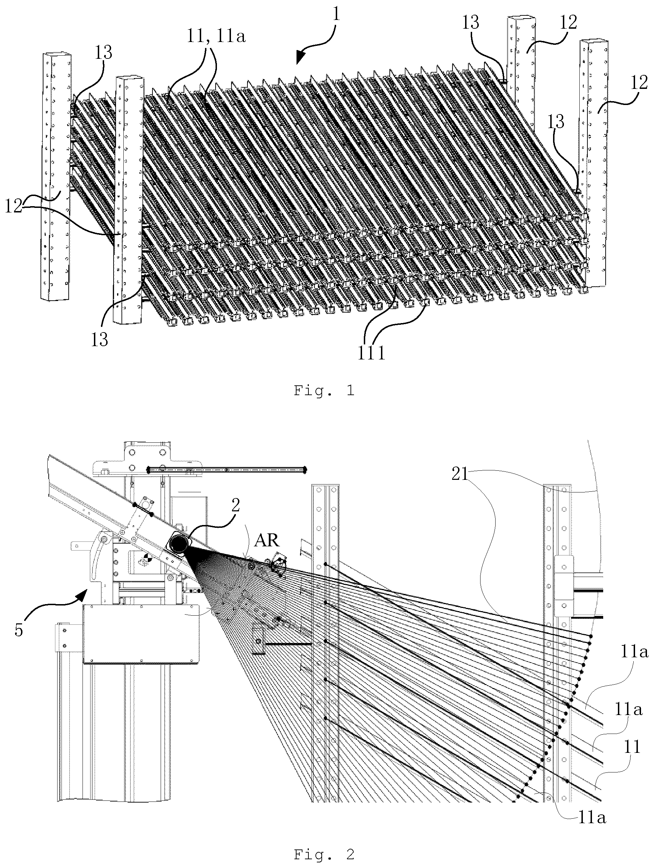

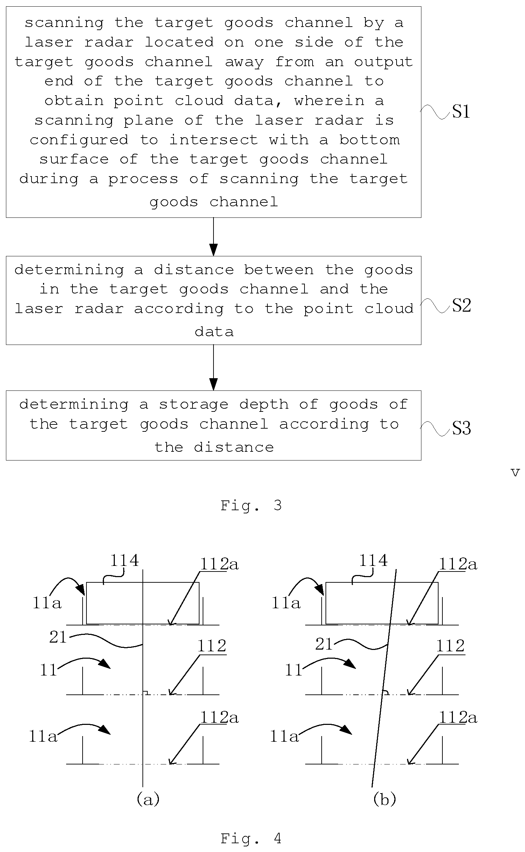

Fig. 1 is a schematic view of a scene structure applied in the embodiment of the detection method according to the present disclosure. Fig. 2 is a schematic view of scanning a shelf by a laser radar (Lidar) in the embodiment of the detection method according to the present disclosure. Fig. 3 is a flow chart of some embodiments of the detection method according to the present disclosure.

Referring to Figs. 1 to 3, the embodiment of the present disclosure provides a detection method for detecting a storage depth of goods of the target goods channel 11 in a shelf 1. The shelf 1 has at least one goods channel for storing the goods. The target goods channel 11 is a goods channel to be detected in the shelf 1, which may be determined according to a related instruction detected. A storage depth of goods which may be defined as a distance from a reference plane of the entrance of the goods channel to the goods closest to the entrance of the goods channel in the goods channel, may be used for judging the amount and size of the goods that may be further stored in the goods channel.

Fig. 1 shows an example of the shelf 1, which may include a plurality of uprights 12, which may be divided into at least two groups, and one or more cross beams 13 may be provided between at least two uprights 12 in each group. The shelf 1 may include a plurality of goods channels, which may be provided as multiple layers of goods channels and may also be further provided as multiple rows of goods channels. Cross beams 13 provided between different groups of uprights 12 may serve as support beams to support a plurality of goods channels.

Each goods channel may be, but is not limited to, a gravity goods channel in the form of slanted arrangement, and the lower end of the goods channel is provided with a baffle to block the goods. Moreover, this end may serve as an output end 111 to output the goods. The upper end of the goods channel may serve as the entrance of the goods channel to receive the goods.

The detection method in the embodiment of the present disclosure includes Step S1, Step S2 and Step S3.

In Step S1, the target goods channel 11 is scanned by the laser radar 2 located on one side of the target goods channel 11 away from the output end 111 of the target goods channel 11 to obtain the point cloud data, wherein a scanning plane 21 of the laser radar 2 is configured to intersect with the bottom surface 112 of the target goods channel 11 during a process of scanning the target goods channel 11.

The laser emitted by the laser radar 2 may form a scanning plane 21, and corresponding point cloud data may be generated according to a signal reflected by an object scanned by the scanning plane 21. The scanning plane 21 may be a 360° circular scanning plane, and may also be a sector scanning plane with a preset angle range. The laser radar 2 may use various existing laser radars capable of forming the scanning plane 21, for example, a mechanical rotary single-line laser radar, a MEMS laser radar, a rotating mirror laser radar and the like.

The laser radar 2 may be arranged at a position on one side of the target goods channel away from the output end 111 in advance, and may also be moved to one side of the target goods channel away from the output end 111 by other driving mechanisms.

The laser radar 2 scans the target goods channel 11 to obtain the point cloud data. During the scanning process, it is possible to obtain the point cloud data of the target goods channel 11 and the objects inside the target goods channel 11, and it is also possible to obtain the point cloud data of other objects scanned by the scanning plane 21 outside the target goods channel 11.

In Step S2, a distance between the goods in the target goods channel 11 and the laser radar 2 is determined according to the point cloud data.

The point cloud data obtained by the laser radar 2 contains a length value corresponding to each sampling angle, and according to the length value, it is possible to determine a linear distance from the laser radar 2 to the goods in the target goods channel 11 or determine a distance from the laser radar 2 to the goods in the target goods channel 11 along an extension direction of the target goods channel 11.

For example, when the laser radar 2 scans a front end face of the goods closest to the entrance of the goods channel in the target goods channel 11 (that is, an end face proximate to the entrance of the goods channel), the obtained point cloud data includes a linear distance (that is, a length value) from the laser radar 2 to the end face. In some circumstances, for example, the length of the target goods channel 11 is much greater than the height, or the vertical distance of the laser radar 2 relative to an extension line of the goods channel 11 is close to the height of the goods, so that the distance from the laser radar 2 to the end face along the length direction of the target goods channel 11 might be slightly different from the linear distance from the laser radar 2 to the end face, and at the same time, this linear distance may be taken as the distance between the goods in the target goods channel 11 and the laser radar 2.

If the distance from the laser radar 2 to the end face along the length direction of the target goods channel 11 is taken as the distance between the goods in the target goods channel 11 and the laser radar 2, the linear distance from the laser radar 2 to the end face may be calculated by trigonometric function.

In Step S3, a storage depth of goods of the target goods channel 11 is determined according to the distance.

The laser radar 2 is outside the target goods channel 11 and may be at a preset distance from the entrance of the goods channel. Correspondingly, after the distance between the goods in the target goods channel 11 and the laser radar 2 is determined, a storage depth of goods of the target goods channel 11 may be determined by subtracting this preset distance.

In this embodiment, the scanning plane 21 of the laser radar 2 is set to intersect with the bottom surface 112 of the target goods channel 11, which allows that the laser radar 2 may cover a large space range, and the goods in the goods channel are more easily captured by the laser radar 2, so as to lessen the influence of factors such as the deformation of the goods channel and the thickness of the goods on the detection of the goods, and reduce the possibility of false negative and false positive of the goods.

Compared with the single distance measurement data of the laser distance measurement sensor in the related art, the point cloud data scanned by the laser radar 2 has more detailed information, which is beneficial to screen out the interference of the structures such as other goods channels and support beams in detecting a storage depth of goods of a target goods channel, so as to detect a storage depth of goods of a target goods channel more effectively.

Fig. 4 is a schematic view of the relationship between the scanning surface and the bottom surfaces of the target goods channel and an adjacent goods channel in the embodiment of the detection method according to the present disclosure. In Figs. 4 (a) and (b), three layers of goods channels are briefly indicated, wherein the second layer of goods channel is the target goods channel 11, and the first and third layers of goods channels are adjacent goods channel 11a of the target goods channel 11. Here, the adjacent goods channel 11a of the target goods channel 11 include one layer of adjacent (i.e., directly adjacent) goods channels, and also include two or more layers of adjacent goods channels. The goods 114 may be stored in the target goods channel 11 and the adjacent goods channel 11a.

In some implementations of the goods channel, since the goods channel may be enclosed by the beams on both sides, there is a partially hollow bottom surface (indicated by a two-dot chain line). From the perspective of the laser radar 2 facing toward the target goods channel 11, the bottom surface of each layer of goods channels in Figs. 4 (a) and (b) and the scanning plane 21 of the laser radar 2 are both presented as straight-line segments. The scanning plane 21 and the bottom surface 112 of the target goods channel 11 may intersect obliquely as shown in Fig. 4 (a), and may also intersect vertically as shown in Fig. 4 (b), with an intersection position on the bottom surface 112 indicated by the two-dot chain line. The scanning plane 21 may be centrally arranged relative to the goods channel, and may also be biased to one side, as long as the goods in the goods channel may be scanned.

The scanning plane 21 may also obliquely intersect or vertically intersect with a reference plane perpendicular to the length direction Id of the goods channel. For the goods 114 in the shape of a cuboid as shown in Figs. 4 (a) and (b), since its length-width surfaces are substantially parallel to the bottom surface of the goods channel, and the front end face adjacent to the laser radar 2 is substantially parallel to the reference plane perpendicular to the length direction of the goods channel, the scanning plane 21 also passes through the length-width surfaces and the front end face of the goods channel, so that the goods 114 may be accurately scanned.

As may be seen from Figs. 4 (a) and (b), the scanning plane 21 not only intersects with the bottom surface 112 of the target goods channel 11, but also intersects with the bottom surfaces 112a of a plurality of adjacent goods channel 11a in the same column, so that it is not only possible to obtain the point cloud data of the goods in the target goods channel 11, but also possible to obtain the point cloud data of the goods in adjacent goods channel 11a.

Referring to Fig. 2, in some embodiments, Step S2 includes: screening for the point cloud data with a sampling angle that conforms to a preset angle range AR in the point cloud data, wherein the target goods channel 11 is located in the preset angle range AR; and determining a distance between the goods 114 in the target goods channel 11 and the laser radar 2 according to the sampling angle in the point cloud data that conforms to the preset angle range AR and a corresponding length value.

In the point cloud data that may be obtained by the laser radar 2, it is possible that only the length values corresponding to some sampling angles are related to the target goods channel 11. The point cloud data is screened for according to the preset angle range AR, and the point cloud data beyond the preset angle range AR is eliminated before subsequent processing, thereby reducing the data processing amount and improving the detection efficiency.

In Fig. 2, a preset angle range AR is enclosed by two opposite arc arrows, and it may be seen that the laser beam based on this preset angle range AR covers the target goods channel 11 and several adjacent goods channel 11a of the target goods channel 11.

The position of the preset angle range AR and the covered angle value may be set according to the position of the laser radar 2 relative to the target goods channel 11 during scanning, and the target goods channel 11 needs to be located in the preset angle range AR. The angle value corresponding to the preset angle range AR may be optionally set to less than 45°, so as to reduce the data processing amount to a greater extent and further improve the detection efficiency.

In some embodiments, the point cloud data obtained by the laser radar 2 may only include the point cloud data corresponding to the target goods channel 11 by setting a narrow preset angle range AR, so as to reduce the data processing amount and reduce the interference of the point cloud data corresponding to other goods channels with the point cloud data corresponding to the target goods channel.

Referring to Fig. 2, in some embodiments, the shelf 1 includes multiple layers of goods channels, and the point cloud data that conforms to the preset angle range AR may include: the point cloud data corresponding to the target goods channel 11 and the point cloud data corresponding to the goods channel where the bottom surface 112a in the adjacent goods channel 11a of the target goods channel 11 intersects with the scanning plane 21.

In Fig. 4, the bottom surfaces 112a of the adjacent goods channels 11a on the upper and lower sides of the target goods channel 11 also intersect with the scanning plane 21, so that the laser radar 2 may obtain the point cloud data corresponding to the two adjacent goods channels 11a. In this way, it is possible to reduce the requirements for the positioning accuracy of the laser radar 2, and reduce the possibility of false negative due to the preset angle range AR not covering or not completely covering the target goods channel.

Since the point cloud data that conforms to the preset angle range AR includes both the point cloud data corresponding to the target goods channel 11 and the point cloud data corresponding to the adjacent goods channel 11a. Therefore, in some embodiments, the step of determining a distance between the goods 114 in the target goods channel 11 and the laser radar 2 according to the point cloud data includes: further screening for the point cloud data corresponding to the target goods channel 11 in the point cloud data that conforms to the preset angle range AR; and determining a distance between the goods 114 in the target goods channel 11 and the laser radar 2 according to each sampling angle and length value in the point cloud data corresponding to the target goods channel 11.

After the point cloud data that conforms to the preset angle range AR is obtained, it is further determined from these point cloud data which sampling angles and length values correspond to the goods 114 in the target goods channel 11, so as to eliminate the interference of the point cloud data corresponding to the adjacent goods channel 11a to obtain a more accurate distance between the goods 114 in the target goods channel 11 and the laser radar 2.

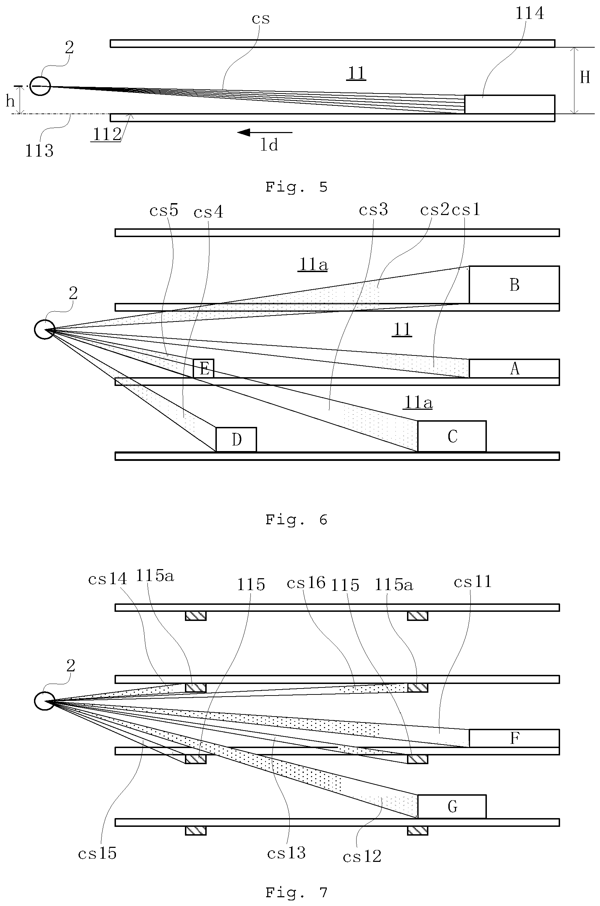

In order to reduce the amount of data to be processed, the step of screening for the point cloud data corresponding to the target goods channel 11 may be directed to the point cloud data that conforms to the preset angle range AR, and in some circumstances, for example, the point cloud data of all the angle ranges obtained by the laser radar 2 is very limited or has sufficient data processing capability, and the step of screening for the point cloud data corresponding to the target goods channel 11 may also be directed to the point cloud data of all the angle ranges obtained by the laser radar 2. Therefore, in some embodiments, in Step S2, the step of determining a distance between the goods 114 in the target goods channel 11 and the laser radar 2 according to the point cloud data may also include: screening for the point cloud data corresponding to the target goods channel 11 in the point cloud data; and determining a distance between the goods 114 in the target goods channel 11 and the laser radar 2 according to each sampling angle and length value in the point cloud data corresponding to the target goods channel 11. Fig. 5 is a schematic view of the principles of screening for the goods through consecutive segment records obtained in the embodiment of the detection method according to the present disclosure. As shown in Fig. 5, the laser beam of the laser radar 2 may form a plurality of sampling points on the front end face of the goods 114, so as to obtain the length values corresponding to a plurality of sampling angles. For some goods with regular shapes, their front end faces are consecutive and regular, and the laser beam and the front end face of the goods 114 are also relatively proximate to vertical or a small skew angle, which allows that the length values in a plurality of the point cloud data obtained from the front end face of the goods 114 are also relatively proximate. Based on this principle, the detected goods may be identified by the proximity in corresponding length values of a plurality of consecutive sampling angles in the point cloud data.

In some embodiments, the step of further screening for the point cloud data corresponding to the target goods channel 11 in the point cloud data includes: determining the point cloud data in which an absolute value of a difference between each of length values corresponding to sampling angles consecutively exceeding a preset number and a length values corresponding to an initial count is not greater than a preset length threshold in the point cloud data, so as to obtain a consecutive segment record of the point cloud data, wherein the consecutive segment record include a sampling angle corresponding to the initial count, the length value corresponding to the initial count and the number of consecutive sampling counting; and screening out the consecutive segment record in which the sampling angle and the length value do not conform to a preset corresponding relationship from the consecutive segment record obtained, so as to determine the point cloud data corresponding to the target goods channel 11.

Here, the interval between adjacent sampling angles may be determined by the resolution of the laser radar, and each sampling angle may correspond to the length value obtained by the laser radar 2. The absolute value of the difference between the length values corresponding to the adjacent sampling angles exceeding the preset number is calculated so that the consecutive segment record cs of the point cloud data may be determined according to this group of the point cloud data if the absolute value of the difference is not greater than the preset length threshold. The consecutive segment record here may include a sampling angle corresponding to the initial count, a length value corresponding to the initial count and the number of consecutive sampling counting in this group of the point cloud data.

For example, for a mechanical rotary single-line laser radar, taking the current sampling angle along the rotation direction of the laser beam as Aₙ, if the absolute value of the difference between its corresponding length value Lₙ and the length value Lₙ₊₁ corresponding to a next sampling angle Aₙ₊₁ (that is, Aₙ+a₀, a₀ is a preset interval of the sampling angles) is less than or equal to the preset length threshold, the sampling angle and the length value may be taken as the sampling angle A₀ and the length value L₀ corresponding to the initial count, and the number of consecutive sampling counting S may be set to 1. At this time, continue to select a next sampling angle. At this time, the current sampling angle Aₙ is Aₙ₊₁ of a previous operation, and the length value Lₙ is Lₙ₊₁ of a previous operation. Correspondingly, the absolute value of the difference between the length value Lₙ₊₁ corresponding to its next sampling angle Aₙ₊₁ and the length value L₀ corresponding to the initial count is also calculated. If the absolute value of the difference is still less than or equal to the preset length threshold, the number of consecutive sampling counting S is set to 2, and continue the operation corresponding to the next sampling angle. Until the absolute value of the difference exceeds the preset length threshold, stop counting the number of consecutive sampling counting S.

If the number of consecutive sampling counting S has exceeded the preset number N at this time, a consecutive segment record cs is determined according to this group of the point cloud data and the number of consecutive sampling counting S, and the consecutive segment record cs may include the sampling angle A₀ corresponding to the initial count, the length value L₀ corresponding to the initial count and the number of consecutive sampling counting S. If the number of consecutive sampling counting S does not exceed the preset number N, it means that this group of the point cloud data do not correspond to a consecutive surface of the goods, so that it is not determined as a consecutive segment record cs. The setting of the preset number N may be related to the factors such as the height of the goods to be detected, the angular resolution of the laser radar and the farthest detection distance of the laser radar.

Referring to Fig. 5, in some embodiments, the vertical distance h of the position where laser radar 2 performs scanning operation relative to the extension line 113 of the target goods channel 11 along the length direction ld is not greater than the height H of the target goods channel 11.

In Fig. 5, the laser radar 2 is located outside the target goods channel 11, and its vertical distance h relative to the extension line 113 of the bottom surface 112 is smaller than the height H of the target goods channel 11, and the vertical distance h may be 1/4, 1/3, 1/2, 2/3 and the like of the height H. For the target goods channel where thin goods (for example, a medicine kit) are mainly stored, the vertical distance h may be set to a size close to the height of the goods, so that the absolute value of the difference between the length values in the point cloud data of the front end face of the goods in the target goods channel 11 may be very close, thereby more easily identifying the goods in the target goods channel 11.

Fig. 6 is a schematic view of the principles of screening out other interferences except the goods in the target goods channel in the embodiment of the detection method according to the present disclosure. Referring to Fig. 6, for the structure with a hollow portion in each layer of goods channels, the point cloud data corresponding to the goods 114 in the target goods channel 11 and the adjacent goods channel 11a may form consecutive segment records.

The objects marked with A, B, C, D and E in Fig. 6 (which may be but are not limited to the goods) correspond to consecutive segment records cs1, cs2, cs3, cs4 and cs5 respectively. It may be seen that the length values of the consecutive segment record cs1 corresponding to the object marked with A in the target goods channel 11 and the consecutive segment record cs2 corresponding to the object marked with B in the adjacent goods channel 11a are slightly different, but the sampling angles corresponding to each consecutive segment record are apparently different, so that the length values and the sampling angles of the consecutive segment record cs2 do not conform to a preset corresponding relationship between the length values and the sampling angles in the consecutive segment records of the target goods channel 11. In this way, it is possible to screen out the consecutive segment record cs2 with the sampling angle that does not conform to the target goods channel 11.

For the object marked with E in the target goods channel 11, the sampling angles of its corresponding consecutive segment record cs5 and the consecutive segment record cs3 corresponding to the object marked with C in the adjacent goods channel 11a are relatively close, but the length value of the consecutive segment record cs5 is apparently different from that of the consecutive segment record cs3, so that the length value and the sampling angle of the consecutive segment cs3 do not conform to a preset corresponding relationship between the length value and the sampling angle in the consecutive segment record of the target goods channel 11. In this way, it is possible to screen out the consecutive segment record cs3 with the sampling angle that does not conform to the target goods channel 11.

For the object marked with D in the adjacent goods channel 11a, its corresponding sampling angle is substantially not within the range of the target goods channel 11, so that the length value and the sampling angle of the corresponding consecutive segment record cs4 apparently do not conform to a preset corresponding relationship between the length value and the sampling angle in the consecutive segment record of the target goods channel 11. In this way, it is possible to screen out the consecutive segment record cs4 with the sampling angle that does not conform to the target goods channel 11.

In this way, after the consecutive segment records of the point cloud data are obtained, the consecutive segment records in which the sampling angle and the length value do not conform to a preset corresponding relationship may be screened out from the consecutive segment records obtained, so that the interference of the point cloud data of other goods channels in detecting the goods in the target goods channel may be effectively removed when the point cloud data corresponding to the target goods channel 11 is determined.

In order to facilitate screening, a pre-stored table of a corresponding relationship between the sampling angle and the length value matching the target goods channel 11 may be set in advance. On this basis, the step of screening out a consecutive segment record in which the sampling angle and the length value do not conform to a preset corresponding relationship from the consecutive segment records obtained may include: querying each consecutive segment record according to the pre-stored table of a corresponding relationship between the sampling angle and the length value to determine the consecutive segment records that do not conform to a preset corresponding relationship in the pre-stored table of a corresponding relationship; and screening out the consecutive segment record that does not conform to the preset corresponding relationship in the pre-stored table of a corresponding relationship.

Here, the records in the pre-stored table of a corresponding relationship may be obtained by summarizing a plurality of actual measurement results, for example, by loading a small amount of goods and filling up the goods in the goods channel to determine a relationship between the sampling angle and the length value corresponding to the goods in the target goods channel at different storage depths. The pre-stored table of a corresponding relationship may also be used to obtain the records of a corresponding relationship between each sampling angle and length value through calculation.

Fig. 7 is a schematic view of processing the point cloud data corresponding to a support beam in the embodiment of the detection method according to the present disclosure. In Fig. 7, for the structure with a hollow portion in each layer of goods channels, the support beam 115 of the target goods channel 11 and the support beam 115a of the adjacent goods channel 11a may be both scanned by the scanning plane 21 of the laser radar 2, and the point cloud data of the support beams 115 and 115a with a certain height may also form consecutive segment records.

It may be seen that, there are two support beams 115 supporting the target goods channel 11 in Fig. 7, which may form consecutive segment records cs13 and cs15, and the two support beams 115a of the adjacent goods channel 11a on the upper side of the target goods channel 11 may form consecutive segment records cs14 and cs16. The objects marked with F and G in the target goods channel 11 and the adjacent goods channel 11a correspond to the consecutive segment records cs11 and cs12 respectively.

Since the installation position of the support beam with respect to the goods channel is relatively fixed, the sampling angle and the length value corresponding to the support beam may be correspondingly obtained in advance as a basis for data filtering. Therefore, in some embodiments, the step of screening out a consecutive segment record in which the sampling angle and the length value do not conform to a preset corresponding relationship from the consecutive segment records obtained includes: screening out consecutive segment records of a sampling angle and a length value corresponding to the support beam 115 of the target goods channel 11 and a sampling angle and a length value corresponding to a support beam 115a of the adjacent goods channel from the consecutive segment records obtained.

Even if it is confronted with such a particular circumstance that the front end face of the goods in the target goods channel 11 is on the same plane as the front end face of the support beam 115, it may also be filtered out by the sampling angle and the length value corresponding to the support beam 115, so as to clearly determine the consecutive segment record corresponding to the front end face of the goods. In this way, it is possible to conveniently remove the interference of the support beams 115 and 115a on detecting the goods in the target goods channel 11, thereby improving the accuracy of detecting a storage depth of the goods channel.

Referring to Fig. 7, considering that there are support beams on the lower side and the upper side of each goods channel, for the target goods channel 11, the sampling angle corresponding to the goods inside is substantially between the sampling angles corresponding to the support beam 115 on one side of the target goods channel 11 proximate to the laser radar 2 and the support beam 115a of the adjacent goods channel 11a on its upper side respectively. This may serve as a judgment basis for determining the point cloud data corresponding to the target goods channel.

Therefore, in some embodiments, the step of screening for the point cloud data corresponding to the target goods channel 11 in the point cloud data may include: further screening for the point cloud data corresponding to the target goods channel 11 in the point cloud data according to a sampling angle and a length value corresponding to the support beam 115 of the target goods channel 11 and a sampling angle and a length value corresponding to the support beam 115a of the adjacent goods channel respectively. In this way, it is possible to conveniently screen out the point cloud data at angles other than the support beams 115 and 115a, so as to more rapidly and conveniently screen for the point cloud data corresponding to the target goods channel 11.

In the above-described embodiments, the basis for screening for the point cloud data corresponding to the target goods channel 11 may be the point cloud data that conforms to the preset angle range AR, or the point cloud data in all the angle ranges obtained by the laser radar 2.

In the above-described embodiments, referring to Fig. 2, in some embodiments, the detection method further includes: in response to an instruction to detect the target goods channel 11, driving the laser radar 2 to move to a position on the upper side of an extension line 113 of the target goods channel 11 on one side of the target goods channel 11 away from the output end 111 along a length direction ld of the goods channel so as to perform a scanning operation at the position.

Referring to Fig. 2, the laser radar 2 may be arranged on the driving mechanism 5. The driving mechanism 5 may drive the laser radar 2 to move to a proper detection position of the target goods channel 11 to be detected. The driving mechanism 5 may be an XYZ three-axis linear module, a multi-joint robot or the like.

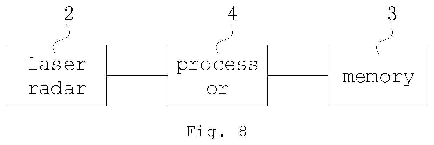

Fig. 8 is a structural schematic view of some embodiments of the detection system according to the present disclosure. Referring to Fig. 8, based on the detection method according to each of the aforementioned embodiments, the embodiment of the present disclosure provides a detection system, which includes : a laser radar 2, a memory 3, and a processor 4 coupled to the memory. The processor 4 is configured to perform the detection method according to any one of the aforementioned embodiments based on instructions stored in the memory.

The memory 3 may be a high-speed RAM memory, a non-volatile memory or the like. The memory 3 may also be a memory array, and might also be partitioned into blocks, which may be combined into a virtual volume according to certain rules. The processor 4 may be a central processing unit CPU, or an Application Specific Integrated Circuit (ASIC), or one or more integrated circuits configured to implement the detection method of the present disclosure.

In the embodiment of the present disclosure, a computer readable storage medium is also provided, wherein the computer readable storage medium non-transitorily stores computer instructions that, when executed by a processor, implement the detection method according to any one of the aforementioned embodiments.

Here, the computer-readable medium may be a computer-readable signal medium, a computer-readable storage medium or any combination thereof. The computer-readable storage medium may be, for example, an electrical, magnetic, optical, electromagnetic, infrared, or semiconductor system, device, or apparatus, or a combination thereof. Examples of the computer-readable storage medium may include: an electrical connection having one or more wires, a portable computer disk, a hard disk, a RAM, a ROM, an Erasable Programmable Read-Only Memory (EPROM) or a flash memory), an optical fiber, a portable Compact Disc Read-Only Memory (CD-ROM), an optical storage device, a magnetic storage device, or any suitable combination thereof.

In some embodiments of the present disclosure, the computer-readable storage medium may be any tangible medium that contains or stores a program which may be used by an instruction execution system, apparatus, or device or used in combination therewith. In some embodiments of the present disclosure, the computer-readable signal medium may include a data signal propagated in a baseband or as a part of a carrier wave, wherein a computer-readable program code is carried. Such propagated data signal may take many forms, including but not limited to an electromagnetic signal, an optical signal, or any suitable combination thereof. This propagated data signal may take multiple forms, including electromagnetic signals, optical signals or any suitable combination thereof. The computer-readable signal medium may send, propagate, or transmit a program for use by an instruction execution system, apparatus, or device or in combination with therewith. The program code contained on the computer-readable medium may be transmitted by any suitable medium, including: a wire, an optical cable, radio frequency (RF), and the like, or any suitable combination thereof.

The embodiments of the present disclosure further provide a computer program product including a computer program that, when executed by a processor implements the detection method according to any one of the aforementioned embodiments.

The codes of the computer program may be written in one or more programming languages or a combination thereof. The programming languages may include object-oriented programming languages, such as Java, Smalltalk, and C++, and may also include conventional procedural programming languages, such as "C" language or similar programming languages. The program code may be executed entirely on the user's computer, partly on the user's computer, executed as an independent software package, partly on the user' s computer and partly executed on a remote computer, or entirely executed on the remote computer or server. In the case of a remote computer, the remote computer may be connected to the user's computer through any kind of network (including a LAN or a WAN), or may be connected to an external computer (for example, connected through Internet using an Internet service provider).

Hereto, various embodiments of the present disclosure have been described in detail. Some details well known in the art are not described in order to avoid obscuring the concept of the present disclosure. According to the above description, those skilled in the art would fully understand how to implement the technical solutions disclosed here.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above embodiments and equivalently substitution of part of the technical features may be made without departing from the scope and spirit of the present disclosure. The scope of the present disclosure is defined by the appended claims.

## Claims

1. A detection method for detecting a storage depth of goods of a target goods channel (11) in a shelf (1), comprising:
scanning the target goods channel (11) by a laser radar (2) located on one side of the target goods channel (11) away from an output end (111) of the target goods channel (11) to obtain point cloud data, wherein a scanning plane (21) of the laser radar (2) is configured to intersect with a bottom surface (112) of the target goods channel (11) during a process of scanning the target goods channel (11);
determining a distance between the goods (114) in the target goods channel (11) and the laser radar (2) according to the point cloud data; and
determining a storage depth of goods of the target goods channel (11) according to the distance.

2. The detection method according to claim 1, wherein the step of determining a distance between the goods (114) in the target goods channel (11) and the laser radar (2) according to the point cloud data includes:
screening for the point cloud data corresponding to the target goods channel (11) in the point cloud data; and
determining a distance between the goods (114) in the target goods channel (11) and the laser radar (2) according to each sampling angle and length value in the point cloud data corresponding to the target goods channel (11).

3. The detection method according to claim 2, wherein the step of screening for the point cloud data corresponding to the target goods channel (11) in the point cloud data includes:
determining point cloud data in which an absolute value of the difference between each of length values corresponding to sampling angles consecutively exceeding a preset number and a length value corresponding to an initial count is not greater than a preset length threshold in the point cloud data, so as to obtain consecutive segment records (cs) of the point cloud data, wherein the consecutive segment records (cs) include a sampling angle corresponding to the initial count, the length value corresponding to the initial count and the number of consecutive sampling counting; and
screening out a consecutive segment record (cs) in which the sampling angle and the length value do not conform to a preset corresponding relationship from the consecutive segment records (cs) obtained to determine the point cloud data corresponding to the target goods channel (11).

4. The detection method according to claim 3, wherein the step of screening out a consecutive segment record (cs) in which the sampling angle and the length value do not conform to a preset corresponding relationship from the consecutive segment records (cs) obtained includes:
querying each consecutive segment record (cs) according to a stored table of a corresponding relationship between a sampling angle and a length value to determine the consecutive segment record (cs) that does not conform to the preset corresponding relationship in the stored table of the corresponding relationship; and
screening out the consecutive segment record (cs) that does not conform to the preset corresponding relationship in the stored table of the corresponding relationship.

5. The detection method according to claim 3 or 4, wherein the step of screening out a consecutive segment record (cs) in which the sampling angle and the length value do not conform to a preset corresponding relationship from the consecutive segment records (cs) obtained includes:
screening out consecutive segment records (cs) of a sampling angle and a length value corresponding to a support beam (115) of the target goods channel (11) and a support beam (115a) of the adjacent goods channel (11a) respectively from the consecutive segment records (cs) obtained.

6. The detection method according to any one of claims 2-5, wherein the step of screening for the point cloud data corresponding to the target goods channel (11) in the point cloud data includes:
further screening for the point cloud data corresponding to the target goods channel (11) in the point cloud data according to a sampling angle and a length value corresponding to the support beam (115) of the target goods channel (11) and a sampling angle and a length value corresponding to a support beam (115a) of the adjacent goods channel (11a).

7. The detection method according to any one of claims 1-6, wherein the step of determining a distance between the goods (114) in the target goods channel (11) and the laser radar (2) according to the point cloud data includes:
screening for the point cloud data with a sampling angle that conforms to a preset angle range (AR) in the point cloud data, wherein the target goods channel (11) is located in the preset angle range (AR) ; and
determining a distance between the goods (114) in the target goods channel (11) and the laser radar (2) according to a sampling angle and a corresponding length value in the point cloud data that conforms to the preset angle range (AR).

8. The detection method according to claim 7, wherein an angle value corresponding to the preset angle range (AR) is less than 45°.

9. The inspection method according to claim 7 or 8, wherein the shelf (1) includes multiple layers of goods channels, and the point cloud data that conforms to a preset angle range (AR) includes: point cloud data corresponding to the target goods channel (11) and point cloud data corresponding to a goods channel where the bottom surface in an adjacent goods channel (11a) of the target goods channel (11) intersects with the scanning plane (21);
wherein the step of determining a distance between the goods (114) in the target goods channel (11) and the laser radar (2) according to the point cloud data includes:
further screening for the point cloud data corresponding to the target goods channel (11) in the point cloud data that conforms to the preset angle range (AR); and
determining a distance between the goods (114) in the target goods channel (11) and the laser radar (2) according to each sampling angle and length value in the point cloud data corresponding to the target goods channel (11).

10. The detection method according to any one of claims 1-9, further comprising:
in response to an instruction to detect the target goods channel (11), driving the laser radar (2) to move to a position on an upper side of an extension line (113) of the target goods channel (11) on one side of the target goods channel (11) away from the output end (111) along a length direction (ld) of the goods channel so as to perform a scanning operation at the position.

11. The detection method according to claim 10, wherein a distance of a position where the laser radar (2) performs a scanning operation relative to the extension line (113) in a vertical direction is not greater than a height of the target goods channel (11).

12. A detection system, comprising:
a laser radar (2);
a memory (3); and
a processor (4) coupled to the memory and configured to perform the detection method according to any one of claims 1 to 11 based on instructions stored in the memory.

13. A computer-readable storage medium, having computer instructions non-transiently stored thereon that, when executed by a processor, implement the detection method according to any one of claims 1 to 11.

14. A computer program product, including a computer program that, when executed by a processor, implements the detection method according to any one of claims 1 to 11.
